# EUROPÄISCHE PATENTSCHRIFT

(11) **EP 1 457 697 B1**
(45) Veröffentlichungstag und Bekanntmachung des Hinweises auf die Patenterteilung: **17.08.2005**
(21) Anmeldenummer: 04009494.8
(22) Anmeldetag: 23.10.2002
(51) Int. Cl.: F16D 13/64, F16D 69/00

(54) **Verfahren zur Herstellung einer Reibscheibe**
Method of making a friction disc
Procédé de fabriquer un disque de frottement

(43) Veröffentlichungstag der Anmeldung: 15.09.2004
(62) Teilanmeldung aus: 02023564.4
(73) Patentinhaber: BorgWarner Inc., Auburn Hills, MI 48326-1782 (US)
(72) Erfinder: Fabricius, Emilio, 67823 Oftersheim (DE); Otremba, Markus, 68723 Schetzingen (DE); Lenk, Meike, 64579 Gernsheim (DE)
(74) Vertreter: Patentanwälte Westphal, Mussgnug & Partner

(56) Entgegenhaltungen:
- EP-A- 0 771 962
- US-A- 4 260 047
- US-A- 6 013 696
- US-A1- 2002 043 441

## Beschreibung

Die Erfindung betrifft ein Verfahren zur Herstellung einer Reibscheibe gemäß dem Oberbegriff des Patentanspruchs 1. Ein solches Verfahren ist aus US-A-4,260,047 bekannt.

Brems- oder Kupplungseinrichtungen, wie z.B. die in den Dokumenten DE 28 54 051 A1, US 4,280,609 oder DE 35 32 759 C1 beschriebenen Mehrscheibenlamellenkupplungen, von denen die Erfindung ausgeht und auf die nachfolgend Bezug genommen wird, basieren auf zwei oder mehr im allgemeinen als Lamellen bezeichneten Reibscheiben mit vorzugsweise im wesentlichen ringförmiger Gestalt. Eine erste Gruppe dieser Lamellen, die sogenannten Außenlamellen, sind auf einem mit einer ersten Welle, beispielsweise einer Antriebswelle, gekoppelten Außenlamellenträger und eine zweite Gruppe dieser Lamellen, die sogenannten Innenlamellen, sind auf einem mit einer zweiten Welle, beispielsweise einer Abtriebswelle, gekoppelten Innenlamellenträger angeordnet. Die Lamellen der beiden Gruppen greifen verzahnungsartig ein Lamellenpaket bildend ineinander, wobei jeweils eine Außenlamelle zu einer Innenlamelle benachbart angeordnet ist. Außenlamellen und Innenlamellen sind in axialer Richtung zueinander begrenzt verschiebbar und dabei paarweise mit deren aneinander grenzenden Stirnflächen in Reibeingriff, d.h. ein Drehmoment von der Antriebs- auf die Abtriebswelle übertragend, und außer Reibeingriff verbringbar.

Ein Teil dieser Lamellen besteht aus einem vorzugsweise metallischen Träger, welcher auf einer oder auf beiden im wesentlichen ringförmigen Stirnflächen einen üblicherweise aus einem Faserstoff oder dergleichen gefertigten Reibbelag trägt. Beispielhaft sei auf die detaillierten Beschreibungen in den vorgenannten Druckschriften hingewiesen.

Reibbeläge der vorgenannten Art wurden anfangs einstückig ausgeführt. Aus Gründen der Materialersparnis ist es inzwischen üblich geworden, diese Reibbeläge aus mehreren einzelnen Reibbelagsegmenten zusammenzusetzen.

Aus mehreren Reibbelagsegmenten bestehende Reibbeläge sind beispielsweise auch aus der EP 0 521 843 A1 bekannt. Jedes Reibbelagsegment eines derartigen segmentierten Reibbelages weist in der Regel an einem an ein Ende eines benachbarten Reibbelagsegments angrenzenden Ende eine Lasche auf, welche in eine entsprechende in das Ende des benachbarten Reibbelagsegments eingebrachte komplementäre Nut eingreift. Auf diese Weise wird eine -auch unter Betriebsdruckbeaufschlagung- im wesentlichen unverrückbare Verbindung zwischen benachbarten Reibbelagsegmenten hergestellt. Diese im wesentlichen unverrückbare Verbindung wird in der Fachsprache auch als Schloss bezeichnet.

Obwohl sich segmentierte Reibbeläge mit derartigen Verbindungen benachbarter Reibbelagsegmente dem Grunde nach bewährt haben, ist eine Beschädigung der Verbindungsstelle möglich, wohingegen bei nichtsegmentierten Reibbelägen eine derartige Beschädigung nicht auftreten kann. Die Beschädigung der Verbindungsstelle ist darauf zurückzuführen, dass es bei Lastbeaufschlagung zu Ausbrüchen an den Verbindungsstellen des Reibbelages kommt. Insbesondere an den jeweiligen Enden der Reibbelagsegmente lose abstehende Fasern des Reibmaterials führen leicht zu einem Ausbruch.

Zur Verminderung der vorschnellen Zerstörung der Reibbeläge wird in der DE 697 01 946 T2 vorgeschlagen, dass die Außenkontur der Lasche nicht exakt die geometrische Gestalt der Innenkontur der Nut aufweist, sondern dass zwischen deren Berandungen ein Speicherraum zur Aufnahme von Kühlmittel und Streufasern gebildet wird. Dadurch wird eine Dissipation und Verteilung der Wärme bewirkt, die im (Regel-) Betrieb in der Mitte der Laschen- und Nutverbindungsstelle erzeugt wird.

Es hat sich gezeigt, dass diese Maßnahme zwar eine erhebliche Reduktion des Verschleißes zur Folge hatte, dass die Lebensdauern von unsegmentierten Belägen jedoch weiterhin unerreicht sind.

Der Erfindung liegt somit die Aufgabe zugrunde, das bekannte Verfahren derart weiterzubilden, dass der Verschleiß von segmentierten Reibbelägen im Schloss-bereich weiter reduziert werden kann.

Diese Aufgabe wird bei einem Verfahren gattungsgemäßer Art durch die Merkmale des kennzeichnenden Teils des Anspruches 1 erfindungsgemäß gelöst.

Diverse Ausführungsbeispiele der Erfindung sind in den Zeichnungen dargestellt und werden im folgenden näher beschrieben.
Es zeigen:
- Figur 1 -: Eine Draufsicht auf eine Reibscheibe mit segmentiertem Reibbelag;
- Figur 2 -: eine Draufsicht auf ein Fragment eines segmentierten Reibbelags;
- Figur 3 -: eine Draufsicht auf ein Fragment eines segmentierten Reibbelags;
- Figur 4 a): einen Umfangsquerschnitt eines Fragments segmentierten Reibbelags;

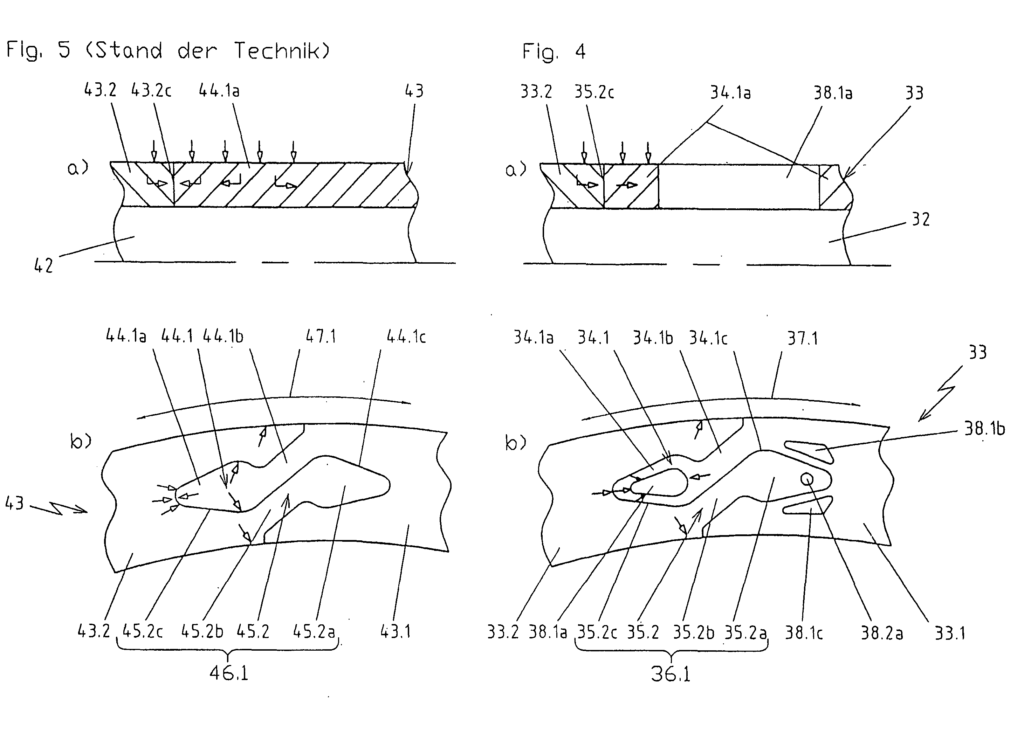

- Figur 4: b) eine Draufsicht auf ein Fragment des in der Figur 4a) dargestellten segmentierten Reibbelags;
- Figur 5 a): einen Umfangsquerschnitt eines Fragments eines segmentierten Reibbelags gemäß dem Stand der Technik, bei dem die geometrische Gestalt des Schlosses der Reibbelagsegmente identisch wie die des Schlosses des in den Figuren 4a) und 4b) dargestellten vierten erfindungsgemäß ausgestalteten Ausführungsbeispiels gewählt ist;
- Figur 5 b): eine Draufsicht auf ein Fragment des in der Figur 5a) dargestellten segmentierten Reibbelags gemäß dem Stand der Technik;

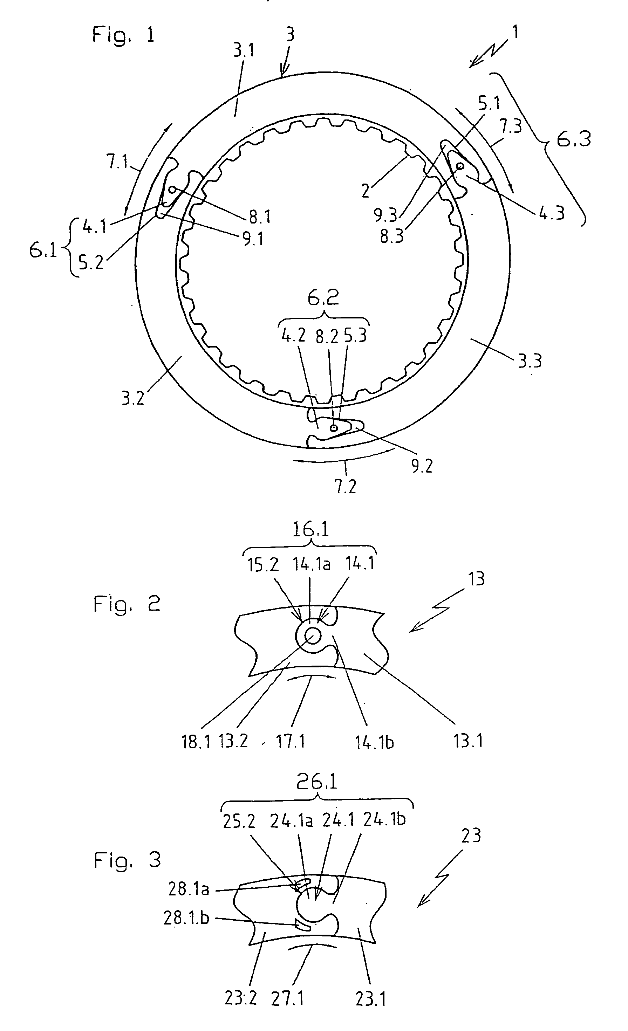

Die Figur 1 zeigt eine Reibscheibe oder Lamelle 1 mit segmentiertem Reibbelag 3. Die Lamelle 1 weist eine im wesentlichen ringförmige Gestalt auf.

Sie umfasst einen im wesentlichen ringförmigen metallischen Träger 2 mit einer Innenverzahnung (alternativ ist selbstverständlich auch eine Außenverzahnung möglich), dessen dem Betrachter zugewandte Stirnfläche großflächig mit einem ringförmigen Reibbelag 3 versehen ist.

Der ringförmige Reibbelag 3 auf der Stirnfläche des Trägers 2 besteht aus drei (alternativ ist jede beliebige ungerade Anzahl möglich) einzelnen Reibbelagsegmenten 3.1, 3.2 und 3.3. Alle drei Reibbelagsegmente 3.1, 3.2 und 3.3 bilden Ringsegmente mit übereinstimmender geometrischer Gestalt. Jeweils zwei Reibbelagsegmente 3.1 und 3.2 bzw. 3.2 und 3.3 bzw. 3.3 und 3.1 grenzen endseitig aneinander und bilden dabei einen im wesentlichen geschlossenen Ring.

Die jeweiligen aneinandergrenzenden Enden benachbarter Reibbelagsegmente 3.1 und 3.2 bzw. 3.2 und 3.3 bzw. 3.3 und 3.1 sind derart komplementär zueinander ausgeführt, dass sie jeweils feste Verbindungen zwischen den benachbarten Reibbelagsegmenten 3.1 und 3.2 bzw. 3.2 und 3.3 bzw. 3.3 und 3.1 bilden, welche in der Fachsprache als Schlösser 6.1, 6.2 und 6.3 bezeichnet werden.

Nachfolgend wird jeweils ein Ende eines Reibbelagsegments 3.1, 3.2 oder 3.3 als Schlosselement und das andere in der Regel komplementär zu dem Schlosselement ausgebildete Ende des Reibbelagsegments 3.1, 3.2 oder 3.3 als Schlossgegenelement bezeichnet.

Vorliegend weisen die jeweiligen Schlosselemente die Gestalt einer Lasche 4.1, 4.2, 4.3 auf. Entsprechend weisen die jeweiligen Schlossgegenelemente die Form einer Nut 5.1, 5.2, 5.3 auf. Die jeweiligen Laschen 4.1, 4.2, 4.3 und Nuten 5.2, 5.3, 5.1 bilden demzufolge jeweils ein Schloss 6.1, 6.2, 6.3.

Bei dem in der Figur 1 dargestellten Ausführungsbeispiel sind die jeweiligen Laschen 4.1, 4.2 und 4.3 länglich ausgebildet. Sie weisen jeweils einen Kopfabschnitt und einen schmaleren Halsabschnitt auf. Die jeweiligen Nuten 5.1, 5.2 und 5.3 sind in ihrer geometrischen Form so gewählt, dass sie die Laschen 4.1, 4.2 und 4.3 aufnehmen können. Die jeweiligen Nuten 5.1, 5.2 und 5.3 erstrecken sich jedoch weiter in Umfangsrichtung, so dass an den jeweiligen Enden der Kopfabschnitte der Laschen 4.1, 4.2 und 4.3 Hohlräume gebildet sind, welche entsprechend der DE 697 01 946 T2 als Speicherräume 9.1, 9.2, 9.3 bezeichnet werden.

Neben diesen Speicherräumen 9.1, 9.2, 9.3 sind in den jeweiligen Schlossbereichen 7.1, 7.2 und 7.3 weitere Hohlräume bildende Öffnungen 8.1, 8.2 und 8.3 vorgesehen. Diese Öffnungen 8.1, 8.2, 8.3 oder Löcher sind vorliegend in die Kopfabschnitte der jeweiligen Laschen 4.1, 4.2, 4.3 eingebracht. Dadurch wird die Elastizität des jeweiligen Schlosses 6.1, 6.2, 6.3 erhöht.
Die Figur 2 zeigt ein Fragment eines zweiten segmentierten Reibbelags 13.

Es sei angenommen, dass der Reibbelag 13 entsprechend dem vorstehend beschriebenen Ausführungsbeispiel Bestandteil einer Lamelle mit im wesentlichen ringförmiger Gestalt ist, welche einen im wesentlichen ringförmigen metallischen Träger mit einer Außen- oder einer Innenverzahnung umfasst, von dem wenigstens eine Stirnfläche entsprechend der vorstehend vorgestellten Variante großflächig mit dem ringförmigen Reibbelag 13 versehen ist.

Der ringförmige Reibbelag 13 auf der Stirnfläche des Trägers besteht aus mehreren einzelnen Reibbelagsegmenten 13.1, 13.2, von denen zwei fragmentarisch in der Zeichnungsfigur abgebildet sind. Die Reibbelagsegmente 13.1, 13.2 bilden entsprechend der vorstehend beschriebenen Variante gemäß der Figur 1 Ringsegmente mit übereinstimmender geometrischer Gestalt. Jeweils zwei Reibbelagsegmente 13.1 und 13.2 grenzen - wie hier skizziert- endseitig aneinander und bilden dabei einen im wesentlichen geschlossenen Ring.

Auch hier sind die jeweiligen aneinandergrenzenden Enden der benachbarten Reibbelagsegmente 13.1 und 13.2 komplementär zueinander, Schlosselemente bzw. Schlossgegenelemente bildend ausgeführt.

Ähnlich wie beim ersten Beispiel gemäß der Figur 1 weisen auch hier die jeweiligen Schlosselemente die Gestalt einer Lasche 14.1 auf. Entsprechend weisen die jeweiligen Schlossgegenelemente die Form einer Nut 15.2 auf. Die in der Zeichnung gemäß der Figur 2 exemplarisch dargestellte Lasche 14.1 und die diese umgreifende Nut 15.2 bilden ein Schloss 16.1.

Bei dem dargestellten Beispiel weist die Lasche 14.1 einen Kopfabschnitt und einen schmaleren Halsabschnitt auf. Der im wesentlichen kreisrunde Kopf und der diesen mit dem übrigen Reibbelagsegment 13.1 verbindende Hals sind in der Zeichnungsfigur mit Hilfe der Bezugszeichen 14.1a bzw. 14.1b gekennzeichnet.

Im hier abgebildeten Schlossbereich 17.1 ist ein Hohlraum vorgesehen. Dieser kreisrunde Hohlraum, hier und im weiteren als Loch bezeichnet, ist in der Zeichnungsfigur 2 durch das Bezugszeichen 18.1 gekennzeichnet. Dieses Loch 18.1 durchsetzt den Kopf 14.1a zentral.

Die Figur 3 zeigt ein Fragment eines weiteren dritten Beispiels eines segmentierten Reibbelags 23.

Dieser Reibbelag 23 ist entsprechend dem vorstehend beschriebenen zweiten Beispiel Bestandteil einer Lamelle und auch im übrigen im wesentlichen identisch ausgeführt.

Exemplarisch zeigt auch das Fragment gemäß der Figur 3 den Schlossbereich 27.1 zweier aneinandergrenzender Reibbelagsegmente 23.1 und 23.2.

Das Schlosselement des ersten Reibbelagsegments 23.1 ist entsprechend dem vorstehend beschriebenen Beispiel ausgestaltet, nämlich in der Form einer Lasche 24.1 mit einem kreisförmigen Kopf 24.1a und einem diesen mit dem Ende des Reibbelagsegments 23.1 verbindenden Hals 24.1b

Das Schlossgegenelement des endseitig an das erste Reibbelagsegment 23.1 angrenzenden zweiten Reibbelagsegments 23.2 ist entsprechend komplementär in der Form einer Nut 25.2 ausgeführt, welche in der Figur 3 die Lasche 24.1 ein Schloss 26.1 bildend formschlüssig umfängt.

Die Beispiele gemäß den Figuren 2 und 3 unterscheiden sich lediglich dadurch, dass bei ersterer der Kopf 14.1a der Lasche 14.1 des ersten Reibbelagsegments 23.1 ein Loch 18.1 aufweist, während bei letzterem in das Schlossgegenelement des zweiten Reibbelagsegments 23.2 in Kopfnähe zwei Löcher 28.1a und 28.1b eingebracht oder eingeformt sind. Beide Ausführungen sind geeignet, die Elastizität des Belags im Schlossbereich 17.1 bzw. 27.1 derart zu erhöhen, dass die mechanische Beanspruchung des Belags unter Last in diesem Bereich signifikant reduziert wird, mit der Folge, dass die Lebensdauer der segmentierten Beläge nahezu der nichtsegmentierter Beläge entspricht.

Die Figur 4 zeigt ein Fragment eines weiteren vierten, bevorzugten Beispiel einer Reibscheibe mit segmentiertem Reibbelag 33. Die Figur 5 zeigt in Gegenüberstellung ein Fragment einer Reibscheibe gemäß dem Stand der Technik, welche -bis auf die Ausgestaltung- identisch wie die in der Figur 4 dargestellte Reibscheibe ausgeführt ist.

Die beiden hier nur fragmentarisch dargestellten Reibscheiben weisen jeweils eine im wesentlichen ringförmige Gestalt auf.

Sie umfassen einen im wesentlichen ringförmigen metallischen Träger 32, 42 und einen ebenfalls ringförmigen Reibbelag 33, 43, welcher jeweils auf eine Stirnseite der Träger 32, 42 vorzugsweise durch Verleimen aufgebracht ist.

Die ringförmigen Reibbeläge 33, 43 bestehen aus einer Mehrzahl von Reibbelagsegmenten, von denen exemplarisch jeweils zwei fragmentarisch in den Figuren 4a) und b) sowie 5a) und b) dargestellt sind. Die dargestellten Reibbelagsegmente tragen die Bezugszeichen 33.1, 33.2 sowie 43.1, 43.2.

Alle (auch die hier nicht gezeichneten) Reibbelagsegmente 33.1, 33.2 bzw. 43.1, 43.2 bilden Ringsegmente mit übereinstimmender geometrischer Gestalt. Jeweils zwei Reibbelagsegmente 33.1 und 33.2 bzw. 43.1 und 43.2 grenzen endseitig aneinander und bilden dabei einen im wesentlichen geschlossenen Ring.

Die jeweiligen aneinandergrenzenden Enden der benachbarten Reibbelagsegmente 33.1 und 33.2 bzw. 43.1 und 43.2 sind derart komplementär zueinander ausgeführt, dass sie jeweils feste Verbindungen (Schlösser) 36.1, 46.1 zwischen den benachbarten Reibbelagsegmenten 33.1 und 33.2 bzw. 43.1 und 43.2 bilden.

Vorliegend umfassen die jeweiligen Schlosselemente 34.1, 44.1 ebenso wie die komplementär ausgebildeten Schlossgegenelemente 35.2, 45.2 eine Lasche mit einem von einem Hals 34.1b, 35.2b, 44.1b, 45.2b getragenen Kopf 34.1a, 35.2a, 44.1a, 45.2a sowie eine an diese Lasche angrenzende Nut 34.1c, 35.2c, 44.1c, 45.2c.

Bei dem in der Figur 4 gezeigten Beispiel sind erfindungsgemäß im Schlossbereich 37.1 mehrere Entspannungs-Löcher/Öffnungen vorgesehen. So weist der rautenförmige Kopf 34.1a des ersten Schlosselements 34.1 eine im wesentlichen die Kontur des Kopfes 34.1a nachzeichnende Öffnung 38.1a. Weiterhin befindet sich auch in dem Kopf 35.2a des Schlossgegenelements 35.2 ein kreisrundes Loch 38.2a. Schließlich sind in das Schlosselement 34.1 in dem an die Nut 34.1c angrenzenden Schlosselementbereich zwei dreieckige Löcher 38.1b und 38.1c eingebracht, welche den rautenförmigen Kopf 35.2a des Schlossgegenelements 35.2 im wesentlichen achssymmetrisch umgeben. Diese Löcher sind vorzugsweise in den Reibbelag eingestanzt.

Den Figuren 4 und 5 ist ferner mit Hilfe von Pfeilen angedeutet, wie senkrecht auf die Oberfläche der jeweiligen Reibbeläge 33, 43 wirkende Kräfte die jeweiligen Reibbeläge 33, 43 in deren Reibbelagsebene deformieren.

Ganz allgemein wird ein deformierbarer Körper bei Einwirkung von Kompressionskräften auf einen Teil dessen Oberfläche in Richtung seiner freien, keinen Kräften ausgesetzten Oberflächen ausweichen. Nicht anders verhält es sich bei einem Reibbelagsegment der vorstehend beschriebenen Art.

Bei Reibbelagsegmenten 43.1, 43.2 gemäß dem Stand der Technik (Figur 5a) und b)) findet demzufolge eine Ausdehnung in der Reibbelagsebene statt. Die Außenberandungen aneinander angrenzender Schlosselemente 44.1 und Schlossgegenelemente 45.2 benachbarter Reibbelagsegmente 43.1, 43.2 werden dabei gegeneinander gedrückt, was schließlich zu einer Aufwölbung im Bereich der Außenberandungen und damit zu einer den Verschleiß unterstützenden mechanischen Belastung.

Anders verhält es sich bei Reibbelagsegmenten 33.1, 33.2 (Figur 4a) und b)). Zwar findet auch hier unter Kompression eine Ausdehnung in der Ebene des Reibbelags 33 selbst statt. Hier kann der Belag 33 jedoch in Richtung der speziell eingebrachten Löcher 38.1a, 38.1b, 38.1c, 38.2a ausweichen. Der horizontal (in der Belagsebene) wirkende Gegendruck im Bereich der aneinandergrenzenden Außenberandungen der Schlosselemente 34.1 und Schlossgegenelemente 35.2 wird dabei deutlich abgebaut. Ein Aufwölben in diesem Bereich ist bei geeigneter Anordnung und Ausdehnung der Löcher 38.1a, 38.1b, 38.1c, 38.2a weitgehend ausgeschlossen.

### Bezugszeichenliste

- 1: Lamelle
- 2: Träger
- 3: Reibbelag
- 3.1: erstes Reibbelagsegment
- 3.2: zweites Reibbelagsegment
- 3.3: drittes Reibbelagsegment
- 4.1: Lasche des ersten Reibbelagsegments
- 4.2: Lasche des zweiten Reibbelagsegments
- 4.3: Lasche des dritten Reibbelagsegments
- 5.1: Nut des ersten Reibbelagsegments
- 5.2: Nut des zweiten Reibbelagsegments
- 5.3: Nut des dritten Reibbelagsegments
- 6.1: erstes Schloss
- 6.2: zweites Schloss
- 6.3: drittes Schloss
- 7.1: erster Schlossbereich
- 7.2: zweiter Schlossbereich
- 7.3: dritter Schlossbereich
- 8.1: erste Öffnung
- 8.2: zweite Öffnung
- 8.3: dritte Öffnung
- 9.1: erster Speicherraum
- 9.2: zweiter Speicherraum
- 9.3: dritter Speicherraum

- 13: Reibbelag
- 13.1: erstes Reibbelagsegment
- 13.2: zweites Reibbelagsegment
- 14.1: Lasche des ersten Reibbelagsegments
- 14.1a: Kopf der ersten Lasche
- 14.1b: Hals der ersten Lasche
- 15.2: Nut des zweiten Reibbelagsegments
- 16.1: erstes Schloss
- 17.1: erster Schlossbereich
- 18.1: erste Öffnung

- 23: Reibbelag
- 23.1: erstes Reibbelagsegment
- 23.2: zweites Reibbelagsegment
- 24.1: Lasche des ersten Reibbelagsegments
- 24.1a: Kopf der ersten Lasche
- 24.1b: Hals der ersten Lasche
- 25.2: Nut des zweiten Reibbelagsegments
- 26.1: erstes Schloss
- 27.1: erster Schlossbereich
- 28.1a: erste Öffnung
- 28.1b: zweite Öffnung

- 32: Träger
- 33: Reibbelag
- 33.1: erstes Reibbelagsegment
- 33.2: zweites Reibbelagsegment
- 34.1: Schlosselement des ersten Reibbelagsegments
- 34.1a: Kopf des ersten Schlosselements
- 34.1b: Hals des ersten Schlosselements
- 34.1c: Nut des ersten Schlosselements
- 35.2: Schlossgegenelement des zweiten Reibbelagsegments
- 35.2a: Kopf des zweiten Schlossgegenelements
- 35.2b: Hals des zweiten Schlossgegenelements
- 35.2c: Nut des zweiten Schlossgegenelements
- 36.1: erstes Schloss
- 37.1: erster Schlossbereich
- 38.1a: erste Öffnung
- 38.1b: zweite Öffnung
- 38.1c: dritte Öffnung
- 38.2a: vierte Öffnung

- 42: Träger
- 43: Reibbelag
- 43.1: erstes Reibbelagsegment
- 43.2: zweites Reibbelagsegment
- 44.1: Schlosselement des ersten Reibbelagsegments
- 44.1a: Kopf des ersten Schlosselements
- 44.1b: Hals des ersten Schlosselements
- 44.1c: Nut des ersten Schlosselements
- 45.2: Schlossgegenelement des zweiten Reibbelagsegments
- 45.2a: Kopf des zweiten Schlossgegenelements
- 45.2b: Hals des zweiten Schlossgegenelements
- 45.2c: Nut des zweiten Schlossgegenelements
- 46.1: erstes Schloss
- 47.1: erster Schlossbereich

## Patentansprüche

1. Verfahren zur Herstellung einer Reibscheibe bei dem die Reibbelagsegmente (3.1, 3.2, 3.3; 13.1, 13.2; 23.1, 23.2; 33.1, 33.2) eines Reibbelags (3, 13, 23, 33) mit einem Träger (2, 32) verleimt werden,
**dadurch gekennzeichnet, dass**
die Reibscheibe (1) nach dem Verleimen in Harz getränkt wird.

## Claims

1. Method of manufacturing a friction disc, whereby the friction lining segments (3.1, 3.2, 3.3; 13.1, 13.2; 23.1, 23.2; 33.1, 33.2) of a friction lining (3, 13, 23, 33) are glued to a carrier (2, 32),
**characterized in that**
after the glueing operation the friction disc (1) is steeped in resin.

## Revendications

1. Procédé pour fabriquer un disque de frottement, dans lequel les segments de garniture de frottement (3.1, 3.2, 3.3; 13.1, 13.2; 23.1, 23.2; 33.1, 33.2) d'une garniture de frottement (3, 13, 23, 33) sont collés à un support (2, 32),
**caractérisé en ce que**
le disque de frottement (1) est imprégné dans de la résine, après l'opération de collage.
